# EUROPEAN PATENT SPECIFICATION

(11) **EP 0 278 926 B1**
(45) Date of publication and mention of the grant of the patent: **13.04.1994**
(21) Application number: 88830049.8
(22) Date of filing: 10.02.1988
(51) Int. Cl.: A01M 7/00

(54) **Foldable spray boom for air atomization of chemical products on crop fields**
Faltbares Spritzgestänge zur Zerstäubung von Chemikalien auf Getreidefeldern
Rampe de pulvérisation pliable pour l'atomisation de produits chimiques sur des champs de céréales

(30) Priority: 13.02.1987 IT 4764387
(43) Date of publication of application: 17.08.1988
(73) Proprietor: SIAPA Società Italo-Americana Prodotti Antiparassitari S.p.A., I-00198 Roma RM (IT)
(72) Inventor: Savi, Dino, I-40018 S. Piero in Casale Bologna (IT); Di Vincenzo, Vincenzo, I-00136 Roma RM (IT)
(74) Representative: Bazzichelli, Alfredo

(56) References cited:
- DE-A- 2 358 204
- FR-A- 2 507 927
- GB-A- 520 271
- US-A- 4 039 147
- LANDTECHNIK, vol. 42, no. 12, December 1987, pages 507-512, Lehrte, DE; B. GÖBEL: "Pflanzenschutzgeräte - Teil II"

## Description

The present invention relates to a foldable spray boom for air atomization of chemical products on crop fields and row cultivations.

It is well known that an atomization of products on cultivations for a treatment with pesticides or herbicides, can be carried out in various ways, all reverting generally to two principles, the mechanical atomization principle and the air or pneumatic pulverisation principle.

Under the air atomization principle, a product in a solution or aqueous suspension to be atomized is put into contact at low pressure and low speed with a high speed air flow which meets and very finely atomizes the product, thus obtaining favourable operational conditions, such as a possibility of using aqueous solutions of product with a low water volume and a good penetration and uniformity of distribution within the vegetation. In accordance with this principle atomizer units are known which essentially comprise a diffuser conveying the air flow, close to the output of which the product to be atomized is brought by a suitable device.

The state of the art provides devices, so called atomizers, essentially comprising a tank to contain the product in an aqueous solution or suspension, at least one blower and a pump for the delivery of the product, which are connected to accessory devices for the atomization of the product, suited to the type of cultivation to be treated.

Whereas the technology of devices for spraying atomized products on tree cultures has had an intense development, the same is not true for a treatment of crop fields, which are presently treated mainly by booms made only for this purpose, rather than as accessory devices and being moreover of a rather complex structure.

GB-A-520271 describes a machine for distributing liquids in the form of spray over land or crops, comprising a power operated air blower and an air trunk having a series of distribution nozzles and a liquid containing vessel connected by supply pipes to the nozzles to atomize the liquid.

DE-A-2358204 describes a frame to support a spraying system in a swingable manner on a vertical plane, the frame in turn being adjustable in a vertical position with respect to the fixed structure of the spraying machine.

The object of the present invention is to provide a foldable boom for air atomization of chemical products on crop fields, which can be used as an accessory element easily appliable to a commercial type of atomizer device, and which is of very simple and light structure.

Within this scope, an object of the invention is to provide a spray boom for air atomization which enables easy adjustment of the height and the position of the atomizers to meet different operational requirements.

Object of the invention is a foldable spray boom comprising a metal structure for air atomization of products on field crops, which is mountable on an atomizer unit by means of said metal structure essentially formed with a frame adapted to be secured to the atomizer unit , said atomizer unit including a tank carried by a tractor and at least a blower, and a pump for delivery of the atomizable product and said boom including a pair of foldable framework sections each pivotally supported on said frame, which can be angularly adjusted with respect thereto, each said foldable framework section being a second metal structure including rods extending in the horizontal direction,
characterized in that it comprises
a beam slidingly engaged with said frame and to be locked in a vertically adjustable position with respect thereto; a self-levelling connecting member integrally mounted with said beam;
said connecting member comprising a horizontal bar provided with sleeves,
a pair of studs slidably supported into said sleeves to be horizontally adjustable with respect to said frame,
and a pair of tubular members each integrally mounted on one of said studs,
each of said foldable framework sections being pivotally mounted on one of said tubular members;
a plurality of collars made of a deformable material fixed along said rods on said foldable sections in a spaced relationship one to another,
brackets to secure said collars to said rods,
a pair of hoses one for each foldable framework section, for fluid communication with said blower, to allow said blower to convey an air flow into said hoses, said hoses being made of a flexible textile material,
fittings to secure said hoses to said plurality of collars on said foldable framework section, said fittings communicating with the inside of said hoses and being provided with a circumferential projection,
threaded rings screwed against the outer surface of said hoses and said circumferential projections on said fittings to secure said hoses to said collars,
a plurality of atomizers spacedly disposed along each of said hoses, each atomizer comprising a diffuser integral with said fitting, so that each atomizer is supported by one of said collars and
a conduit for each one of said hoses said conduit being supported by said foldable framework section and being in fluid communication with said atomizers for feeding said product to said atomizer.

The spray boom according to the invention further comprises
a disk integrally secured with each said tubular member having angularly distributed reference notches,
and a spring blade integrally mounted on each framework foldable section having a projection to be engaged with one of said notches for locking said foldable framework section in a selected angular position with respect to said frame. Other preferred features are described in dependent claims 3-5.

Additional features and advantages of the invention will be illustrated in further detail in the following description of a preferred embodiment, with reference to the accompanying drawings, in which:
figure 1 is a partial perspective view of the spray boom with the foldable sections open;
figure 2 is a cross section along line II-II in figure 1; and
figure 3 is a cross section along line III-III in figure 1.

Referring to the drawings, in 1 is generally illustrated an atomizer unit of conventional type comprising a tank 1a, blowers 1b and 1c and a pump 1d for delivery of the atomizable product. The tank is provided with supporting and stiffening members indicated in 1e and a link to a drawing tractor, not shown in the figures.

To the supporting members 1e a metal structure according to the invention is removably connected, which includes a pair of foldable framework sections and will be hereinafter described in detail. The structure comprises a frame 2 with posts 2a and 2b which are secured to the supporting members 1e by means of rods 3a, 3b and struts 4a, 4b. A beam 6 is engaged with said posts and it can slide along them being supported by a cable 5a of a system for controlling the height position of said beam 6 with respect to the frame 2, comprising a winch 5 on which the cable 5a is wound and which can be operated manually. The beam 6 supports a bar 8 through a self levelling connecting member 7 of conventional type.

The bar 8 is provided at its ends with sleeves 8a, 8b for a telescopical engagement with studs 9 and 10. On the ends of the studs 9 and 10 tubular members 9a and 10a are secured by welding, on which the foldable framework sections generally indicated in 11 and 12 are pivotally engaged. Controlling the telescopical engagement of the studs 9 and 10 enables the location of a position of the foldable framework sections which affords the best overlying conditions as said sections are folded.

As both the foldable framework sections 11 and 12 are equal only that indicated in 11 will be hereinafter described in detail. Section 11 comprises a first half-section formed by a quadrilateral consisting of a C-shaped member indicated in 13 and rods 14 and 15 connected by a leg 16. To the leg 16 the second half-section is pivotally connected, which is formed by rods 17 and 18 connected by a leg 19. A spring 20 holds the two half-sections in the open position.

A disk 21 integral with the perifery of the tubular member 9a is provided with three reference notches 21a, 21b, 21c for receiving a projection 22 of a spring blade 23 secured to a block 24 integral with the member 13.

Setting the projection 22 into the notch 21a represents a reference for the open position of the spray boom shown in figure, and the spring connection by the blade 23 between the section 11 and its tubular member 9a is such as to absorb softly any shock to the boom during operation.

A description of the metal structure is completed by appreciating that a support 25 with an integral appendix 26 and a support 27 with an integral appendix 28 are linked to the bar 8. To the blowers 1b and 1c, by means of extendable pipes 29 and 30 for compensation of height variations, hoses 31 and 32, preferably in a soft textile material, are connected, which are supported by the above described metal structure and from which the diffusers are branched for atomizing the liquid contained in the tank, as it will be better described hereinafter.

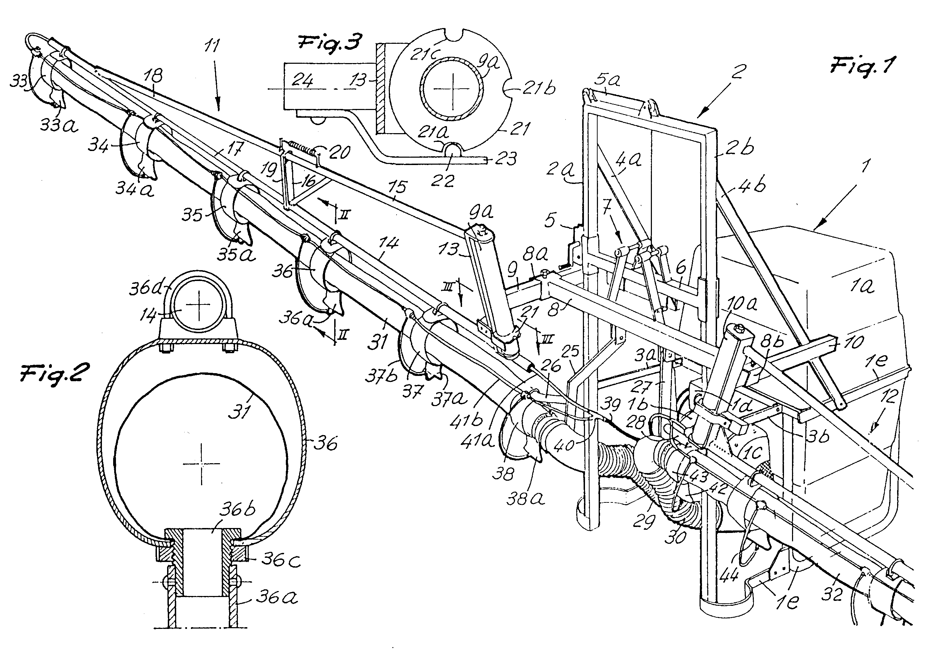

Turning now to the hose 31, it is supported, as illustrated, by collars 33, 34, 35, 36, 37 made of a moderately deformable material connected to the rods 14 and 17 of the foldable framework section 11 as well as by collar 38 connected to the appendix 26 of the support 25. The diffusers 33a, 34a, 35a, 36a, 37a, 38a of the atomizers are branched from said hose in correspondence with said collars. Referring to figure 2 related to collar 36, the assembly of the diffusers to the respective collars will be described hereinafter in detail.

In figure 2 it is shown that the diffuser 36a is made integral with a fitting 36b open to the interior of the hose 31 and secured by means of a threaded ring 36c to both the wall of the hose 31 and the collar 36 which are provided with suitable holes. The collar 36 is secured to the rod 14 of section 11 by means of a bracket 36d. This connection enables an easy handling for adjusting the inclination of the diffuser with respect to the soil so as to meet different operation requirements. The product to be atomized contained in the tank 1a is fed to the atomizers through the conduit 39 connected to the output of the pump 1d. The conduit 39 has a biforcation 40 from which a ring conduit is derived, a branch 41a of which is inserted for protection into the rods 14 and 17, whereas from a branch 41b, fitting conduits are derived, such as 37b, which convey the product to the output of the previously described diffusers.

More particularly, according to a method per se known in the field of pneumatic atomization, the product is delivered to a device positioned at the output of the diffusers at a low pressure and a low speed, to be in the best condition for the atomization and to be hit by the air flow going out from said diffusers and coming from the conveying hose 31.

The ring configuration of the conduit formed by the branches 41a and 41b serves the purpose of making the pressure drop as low as possible at the various diffusers, so as to make the operative conditions thereof as uniform as possible. To this purpose calibrated platelets can be inserted in the fittings, to make the flow rate at the individual diffusers uniform. What has been illustrated with reference to the hose 31 is also true for the hose 32 from which a diffusor 42 is branched in correspondence with a collar 43 secured to a strap 28 of the support 27, as are further diffusers, in a number similar to that corresponding to the hose 31, as indicated in 44 for example.

It is obvious that the number and the position of the atomizers connected to the foldable framework sections 11 and 12 and the central supports 25 and 27 will be determined so as to meet both requirements of operating the treatment of the cultivation with a good uniformity and avoiding an over-treatment in the folding operation. Consequently the atomizers in correspondence with the central supports could be also omitted.

From the foregoing it can be appreciated that our invention is of high simplicity both from the structural and operational point of view. It is also important to note the features of lightness and easiness of linking of the spray boom of the invention to a conventional atomizer unit, which are basic features for an accessory device, such as the present inventions intends to be.

The above described invention can be realized with various embodiments and modifications, all falling within the scope of the invention. As an example, the hoses could be supported by the metal structure in any manner, and also the atomizing diffusers could be branched from the hoses in any manner.

As a further modification, the spray boom can be realized in a variable geometry configuration, such that it could be used horizontally extended, as in the embodiment illustrated for crop fields, as well as extended in a vertical direction for its use in row or espalier cultivations. This change of geometry can be obtained by means of pivotal connections.

In a practical embodiment of the invention any particular element can be substituted by other technically equivalent element. Moreover any material, shape and size can be used.

## Claims

1. Foldable spray boom comprising a metal structure for air atomization of products on field crops, which is mountable on an atomizer unit (1) by means of said metal structure essentially formed with a frame (2) adapted to be secured to the atomizer unit (1), said atomizer unit including a tank (1a) carried by a tractor and at least a blower (1b, 1c) and a pump (1d) for delivery of the atomizable product and said boom including a pair of foldable framework sections (11, 12) each pivotally supported on said frame (2), which can be angularly adjusted with respect thereto, each said foldable framework section (11, 12) being a second metal structure including rods (14, 17),
characterized in that it comprises
a beam (6) slidingly engaged with said frame (2) and to be locked in a vertically adjustable position with respect thereto; a selflevelling connecting member (7) integrally mounted with said beam (6),
said connecting member (7) comprising a horizontal bar (8) provided with sleeves (8a, 8b),
a pair of studs (9, 10) slidably supported into said sleeves (8a, 8b) to be horizontally adjustable with respect to said frame (2),
and a pair of tubular members (9a, 10a) each integrally mounted on one of said studs (9, 10),
each of said foldable framework sections (11, 12) being pivotally mounted on one of said tubular members (9a, 10a);
a plurality of collars made of a deformable material (33 to 37) fixed along said rods (14, 17) on said foldable framework sections in a spaced relationship one to another,
brackets (36d) to secure said collars to said rods (14, 17),
a pair of hoses (31, 32) one for each foldable framework section (11, 12), for fluid communication with said blower (1b), to allow said blower to convey an air flow into said hoses, said hoses being made of a flexible textile material,
fittings (36b) to secure said hoses (31, 32) to said plurality of collars (33 to 38) on said foldable framework section, said fittings (36b) communicating with the inside of said hoses (31, 32) and being provided with a circumferential projection,
threaded rings (36c) screwed against the outer surface of said hoses and said circumferential projections on said fittings (36b) to secure said hoses to said collars,
a plurality of atomizers (33 to 38a) spacedly disposed along each of said hoses, each atomizer comprising a diffuser (36a) integral with said fitting (36b), so that each atomizer is supported by one of said collars (33 to 38), and
a conduit (39) for each one of said hoses (31, 32) said conduit being supported by said foldable framework section and being in fluid communication with said atomizers for feeding said product to said atomizer.

2. Spray boom according to claim 1, further comprising
a disk (21) integrally secured with each said tubular member (9a, 10a) having angularly distributed reference notches (21a to 21c),
and a spring blade (23) integrally mounted on each foldable framework section (11, 12) having a projection (22) to be engaged with one of said notches (21a to 21c) for locking said foldable framework section in a selected angular position with respect to said frame.

3. Spray boom according to claim 2, in which said frame (2) comprises posts (2a, 2b) and said beam (6) is slidingly supported on said posts (2a, 2b) and the position of said beam (6) along said posts (2a, 2b) is controlled by a system including a cable (5a) and a winch (5) supported on said frame (2).

4. Spray boom according to anyone of the preceeding claims, in which said hoses (31, 32) are connected to the blowers of the atomizer unit by means of an extendable pipe (29, 30) to enable a modification of height.

5. Spray boom according to anyone of the preceeding claims, in which at least one atomizer (38a, 42) is connected to said metal structure (26, 28) in a fixed position in front of the atomizer unit, and the other atomizers (33 to 37) are connected to the foldable framework sections of said structure.

## Patentansprüche

1. Faltbares Spritzgestänge, welches eine Metallkonstruktion umfaßt, zur Zerstäubung von Erzeugnissen auf Feldfrüchte, das durch die Metallkonstruktion auf eine Zerstäubungseinheit (*1*) angebracht werden kann, und welches im wesentlichen aus einem an der Zerstäubungseinheit (*1*) befestigten Rahmen besteht, wobei die Zerstäubungseinheit einen von einem Traktor getragenen Tank (*1a*), und wenigstens ein Gebläse (*1b,1c*) sowie eine Pumpe (*1d*) zur Zufuhr des zerstäubbaren Erzeugnisses enthält, wobei das Gestänge ein Paar zusammenklappbare Querschnitte (*11,12*) einschließt, die jeweils schwenkbar von dem Rahmen (*2*) getragen werden, die demgegenüber winkelig eingestellt werden können, wobei jeder zusammenklappbare Querschnitt (*11,12*) aus einer zweiten Metallkonstruktion besteht, die Stangen (*14,17*) einschließt,
dadurch gekennzeichnet, daß es eine Querstange (*6*) umfaßt, die verschiebbar in den Rahmen (2) eingreift, und demgegenüber in einer vertikal einstellbaren Position blockiert wird;
ein fest an der Querstange (*6*) angebrachtes sich selbst anpassendes Verbindungselement (*7*), wobei das Verbindungselement (*7*) einen waagerechten mit Muffen (*8a,8b*) versehenen Stab (*8*) enthält, ein Paar Überhangelemente (*9,10*) in den Muffen (*8a,8b*) gleitend getragen, und waagerecht einstellbar in Bezug auf den Rahmen (*2*), und ein Paar Rohrelemente (*9a,10a*) die jeweils fest an einem der Überhangelemente (*9,10*) angebracht sind, wobei jeder zusammenklappbare Querschnitt (*11,12*) schwenkbar an einem der Rohrelemente (*9a,10a*) angebracht ist; eine Vielzahl von Bundringen aus verformbarem Material (*33 bis 37*) in Abständen längs der Stäbe (*14,17*) auf den zusammenklappbaren Querschnitten angebracht, Bügelbolzen (*36d*) um die Bundringe an den Stäben (*14,17*) zu befestigen, für jeden zusammenklappbaren Querschnitt (*11,12*) ein Paar Rohre (*31,32*) zur Fluidverbindung mit dem Gebläse (*1b*), damit das Gebläse Luftzufuhr in die Rohre gewähren kann, wobei die Rohre aus biegsamem Textilmaterial gemacht sind,
Verbindungsstücke (*36b*), die die Rohre (*31,32*) an diese Vielzahl von Bundringen (*33 bis 38*) auf dem zusammenklappbaren Querschnitt festhalten, wobei die Verbindungsstücke (36b) mit dem Inneren der Rohre (*31,32*) in Verbindung stehen und mit einem kreisförmigen Vorsprung versehen sind,
Nutmuttern (*36c*) auf die Oberfläche der Rohre geschraubt und die kreisförmigen Vorsprünge auf die Anschlußstücke (*36b*) um die Rohre an den Bundringen zu befestigen,
eine Vielzahl von Zerstäubern (*33 bis 38a*) in Abständen längs eines jeden Rohres angebracht, wobei jeder Zerstäuber eine mit dem Verbindungsstück (*36b*) verbundene Zerstäuberdüse (*36a*) enthält, so daß jeder Zerstäuber von einem dieser Bundringe (*33 bis 38*) getragen wird, und eine Leitung (*39*) für jedes dieser Rohre (*31,32*), wobei diese Leitung von dem zusammenklappbaren Querschnitt getragen wird und in Fluidverbindung mit den Zerstäubern steht zur Zufuhr des Erzeugnisses zu den Zerstäubern.

2. Spritzgestänge nach Anspruch 1, weiterhin bestehend aus einer Scheibe (*21*) die fest an jedem Rohrelement (*9a,10a*) angebracht ist, und worauf sich winkelförmig verteilte Bezugs-Rasten (*21a bis 21c*) befinden, und ein Federblatt (*23*) fest auf jedem zusammenklappbaren Querschnitt (*11,12*) in einer dem Rahmen gegenüber ausgewählten Winkelstellung angebracht ist.

3. Spritzgestänge nach Anspruch 2, wobei der Rahmen (*2*) Ständer (*2a,2b*) enthält an denen die Querstange (*6*) verschiebbar befestigt ist und die Position der Querstange (*6*) den Ständern (*2a,2b*) entlang durch ein Seil (*5a*) und ein Gewinde (*5*) enthaltendes System begrenzt wird, das auf dem Rahmen (*2*) befestigt ist.

4. Spritzgestänge nach einem der vorangehenden Ansprüche, wobei die Rohre (*31,32*) mit den Gebläsen der Zerstäubungseinheit durch ein längsausdehnbares Rohr (*29,30*) verbunden sind um eine Höhenänderung zu ermöglichen.

5. Spritzgestänge nach einem der vorangehenden Ansprüche, wobei wenigstens ein Zerstäuber (*38a,42*) mit der Metallkonstruktion (*26,28*) in einer der Zerstäubungseinheit gegenüberliegenden unbeweglichen Position verbunden ist, und die anderen Zerstäuber (*33 bis 37*) mit den zusammenklappbaren Querschnitten der Konstruktion verbunden sind.

## Revendications

1. Rampe d'arrosage repliable comprenant une structure métallique, pour la pulvérisation par l'air d'un produit sur des récoltes en plein champ, qui peut être montée sur une unité de pulvérisation (1) au moyen d'une structure métallique formée essentiellement d'un cadre (22) apte à être fixé à l'unité de pulvérisation (1), la dite unité de pulvérisation ayant un réservoir (1a) transporté par un tracteur et au moins une soufflante (1b, 1c) et une pompe (1d) pour le débit du produit à pulvériser et la dite rampe ayant deux sections (11, 12) de charpente repliables dont chacune est supportée de manière à pivoter sur le dit cadre (2), lesquelles peuvent être ajustées par rotation par rapport à celui-ci, chacune des dites sections des charpentes repliables (11, 12) étant une seconde structure métallique comprenant des tiges (14, 17), caractérisée en ce qu'elle comprend:
une barre (6) engagée de façon à coulisser avec le dit cadre (2) et qui peut être bloquée dans une position réglable verticalement par rapport à celui-ci; un élément de connexion (7) de mise à niveau automatique monté de façon solidaire avec la dite barre (6);
le dit élément de connexion (7) comprenant une poutre horizontale (8) pourvue de manchons (8a, 8b);
deux appendices (9, 10) supportées de manière à coulisser dans les dits manchons (8a, 8b) pour être ajustées horizontalement par rapport au dit cadre (2);
deux éléments tubulaires (9a, 10a) montés solidairement sur l'une des dites appendices (9, 10) chacune des dites sections de charpente repliables (11, 12) étant montées de manière à pivoter sur l'un de dits éléments tubulaires (9a, 10a);
une pluralité de collets en matériau déformable (33 à 37) fixés le long des dites tiges (14, 17) sur les dites sections de charpente repliable, en position espacée l'un par rapport à l'autre;
deux crochets (36d) pour fixer les dits collets aux dites tiges (14, 17);
deux tuyaux flexibles (31, 32), l'un pour chacune section de charpente repliable (11, 12), en communication de flux avec la dite soufflante (1b), pour permettre à la dite soufflante de débiter un flux d'air dans le dit tuyau, le tuyau étant formé de matériel textile flexible;
deux raccords (36b) pour fixer les dits tuyaux flexibles (31, 32) à la dite pluralité de collets (33 a 38) sur la dite section de charpente repliable, les raccords (36b) étant en communication avec l'intérieur du dit tuyau flexible (31, 32) et étant pourvus d'une prolongation circonférentielle;
deux anneaux filetés (36c) vissés contre la surface extérieure du dit tuyau flexible et de la dite prolongation (36b) pour fixer le tuyau flexible au collet;
une pluralité de pulvérisateurs (33 à 38a) espacés le long de chaque tuyau flexible, chaque pulvérisateur comprenant un diffuseur (36a) solidaire avec le dit raccord (36b) de manière à ce que chaque pulvérisateur soit supporté par l'un des dits collets (33 à 38), et
un conduit (39) pour chacun des dits tuyaux flexibles (31, 32), le dit conduit étant supporté par la dite section de charpente repliable et étant en communication de flux avec le dit pulvérisateur pour alimenter le dit produit au dit pulvérisateur.

2. Rampe d'arrosage selon la revendication 1, comprenant en outre un disque (21) fixé solidairement sur chaque élément tubulaire (9a, 10a) ayant deux entailles de repère distribuées périphériquement (21a à 21c),
et une lame élastique (23) montée solidairement sur chaque section de charpente repliable (11, 12), ayant une protubérance (22) pouvant s'engager dans l'une des dites entailles (21a, 21c) pour bloquer la dite section de charpente repliable à un angle choisi par rapport au dit cadre.

3. Rampe d'arrosage selon la revendication 2, où le dit cadre (2) comprend des montants (2a, 2b) et la dite barre (6) est supportée de manière à coulisser sur le dit montant (2a, 2b) et la position de la barre (6) le long du montant (2a, 2b) est contrôlée par un système qui comprend un câble (5a) et un treuil (5) supporté sur le dit cadre (2).

4. Rampe d'arrosage selon l'une quelconque des revendications précédentes, où les dits tuyaux flexibles (31, 32) sont realiés à la soufflante de l'unité de pulvérisation au moyen d'un tube extensible (29, 30) pour permettre une modification en hauteur.

5. Rampe d'arrosage selon l'une quelconque des revendications précédentes, où au moins un pulvérisateur (38a, 42) est relié à la dite structure métallique (26, 28) dans une position détéerminée en face de l'unité de pulvérisation et les autres pulvérisateurs (33 à 37) sont reliés à la section de charpente repliable de la dite structure.
